# EUROPEAN PATENT APPLICATION

(11) **EP 1 699 217 A1**
(43) Date of publication of application: **06.09.2006**
(21) Application number: 05251249.8
(22) Date of filing: 02.03.2005
(51) Int. Cl.: H04M 1/725

(54) **Improved user interface for configuring a handheld electronic device, and associated method**

(71) Applicant: Research In Motion Limited, Waterloo, Ontario N2L 3W8 (CA)
(72) Inventor: Bocking, Andrew D., Waterloo, Ontario N2K 3Y8 (CA)
(74) Representative: Roberts, Gwilym Vaughan

(57) **Abstract**

An improved handheld electronic device and an associated method provide a plurality of output modes that can be selected by a user depending upon the circumstances of a given environment. The various modes include, for example, a NORMAL mode, a SILENT mode, a LOUD mode, an OFF mode, and a TELEPHONE ONLY mode. The various annunciation settings applicable to a routine are customizable within the routine. All of the annunciation settings are output settings that are in effect whenever the NORMAL mode is active on the handheld electronic device. The other modes are alternate modes that provide operational masks which, when one of the alternate modes is active on the handheld electronic device, can override certain of the output settings that ordinarily are associated with the NORMAL mode.

## Description

### BACKGROUND OF THE INVENTION

### Field of the Invention

The invention relates generally to handheld electronic devices and, more particularly, to a handheld electronic device having an improved profiles facility, and an associated method.

### Description of the Related Art

Numerous types of handheld electronic devices are known. Examples of such handheld electronic devices include, for instance, personal data assistants (PDAs), handheld computers, two-way pagers, cellular telephones, and the like. Such handheld electronic devices are generally intended to be portable and thus must be relatively small. Many handheld electronic devices feature a wireless communication capability, although many handheld electronic devices are stand-alone devices. Since handheld electronic devices typically are portable, it is also desired that the form factor of the devices be sufficiently small and ergonomic that they can conveniently be transported with a belt clip, in a user's pocket, manually, or in a briefcase. Advancements in technology have permitted the form factor of such handheld electronic devices to be reduced while increasing their versatility and functionality, such as by increasing the number of functions provided by the device as well as increasing the number of software applications and the variety of their features. However, as the form factor of a handheld electronic device decreases and the number of functions provided by the device increases, the device potentially can become awkward and difficult to use.

A handheld electronic device typically has a plurality of routines stored thereon that are executable on a processor of the device. When executed, many of the routines interact in some fashion with the user, and such interaction may include providing certain output that can be perceived by the user. The various outputs provided by the various routines are typically customizable in some fashion by a user depending upon the user's needs and/or desires. For instance, a user might consider incoming telephone calls to be of relatively greater importance than incoming e-mail messages, and a user thus might customize the annunciation settings, i.e., output settings, such that an incoming telephone call might result in an audible annunciation that, by way of example, may be louder and/or be of a longer duration than the output provided in response to a received e-mail message. By way of further example, the audible telephone annunciation may be combined with a visual and/or tactile output. Certain preset annunciations may, however, be undesirable in certain circumstances. For instance, an audible annunciation regarding the receipt of an e-mail message or a telephone call might be undesirable in a quiet setting, such as a business meeting. On the other hand, a visual annunciation such as might be provided by a flashing LED, or a tactile annunciation such as might be provided by a vibration mechanism, might be appropriate and useful in the same environment. It thus has been desirable to enable various annunciations to each be customizable with a plurality of settings that can be applied in different situations. Such systems have not, however, been without limitation.

It has been known to provide a routine that provides to the handheld electronic device different output modes such as DISCREET, LOUD, QUIET, and the like. Each annunciation would have a setting for each output mode, i.e., each of DISCREET, LOUD, and QUIET. Each such output mode therefore would have its own set of output parameters for the various annunciations of the various routines. Whenever a given output mode is active on the handheld electronic device, the annunciation settings associated therewith would be active on the handheld electronic device. However, setting a given annunciation in each of a plurality of output modes can be cumbersome due to the large effort required. Moreover, a change that is made to an annunciation setting often must be made in each of the various output modes, which can also be cumbersome and places the user at risk at having erroneously made a change or having missed a needed change in an annunciation. It thus would be desirable to provide an improved handheld electronic device and/or an improved method that overcome one or more of the limitations of known devices.

### SUMMARY OF THE INVENTION

An improved handheld electronic device and an associated method provide a plurality of output modes that can be selected by a user depending upon the circumstances of a given environment. The various modes include, for example, a NORMAL mode, a SILENT mode, a LOUD mode, an OFF mode, and a TELEPHONE ONLY mode. The various annunciation settings applicable to a routine are customizable within the routine. All of the annunciation settings are output settings that are in effect whenever the NORMAL mode is active on the handheld electronic device. The other modes are alternate modes that provide operational masks which, when one of the alternate modes is active on the handheld electronic device, can override certain of the output settings that ordinarily are associated with the NORMAL mode.

Accordingly, an aspect of the invention is to provide an improved handheld electronic device that enables output settings associated with a routine to be customized within the routine.

Another aspect of the invention is to provide a handheld electronic device having a number of output parameters that can be globally modified in a predetermined fashion by the user selecting an output mode from among a plurality of output modes.

Another aspect of the invention is to provide an improved handheld electronic device on which output settings are customizable yet are globally changeable depending upon an output mode selected by the user.

Another aspect of the invention is to provide an improved method of enabling events of routines to be processed in accordance with preset output settings and in accordance with operational masks that can cause the output settings to be overridden in a predetermined fashion.

Accordingly, an aspect of the invention is to provide an improved method of processing a predetermined event of a first routine from among a plurality of routines stored on a handheld electronic device. The handheld electronic device includes an output apparatus and a processor apparatus, with the processor apparatus being adapted to provide output signals to the output apparatus in accordance with predetermined output settings. The first routine has a number of first output settings. A second routine of the plurality of routines is adapted to be adjustable between a NORMAL mode and at least a first alternate mode, with the at least a first alternate mode having a number of alternate output settings. The handheld electronic device is adapted to process the predetermined event of the first routine in accordance with the first output settings when the second routine is in the NORMAL mode. The general nature of the method can be stated as including detecting an occurrence of the predetermined event of the first routine, determining that the second routine is in the at least a first alternate mode and, responsive to such determining, processing the predetermined event in accordance with the alternate output settings.

Another aspect of the invention is to provide an improved handheld electronic device, the general nature of which can be stated as including, an input apparatus, an output apparatus, and a processor apparatus. The input apparatus is adapted to provide input, and the output apparatus adapted to provide output. The processor apparatus includes a processor and a memory, with the processor being cooperable with the input apparatus and the output apparatus. The memory has a plurality of routines stored therein that are executable on the processor. The processor is adapted to process a number of predetermined events of at least a portion of the routines in accordance with a number of output settings and to provide output signals to the output apparatus in accordance with the output settings. A first routine has a number of first output settings. A second routine is adapted to be adjustable between a NORMAL mode and at least a first alternate mode, with the at least a first alternate mode having a number of alternate output settings. Responsive to an occurrence of a predetermined event of the first routine, the processor apparatus is adapted to process the predetermined event in accordance with the first output settings when the second routine is in the NORMAL mode. Responsive to the predetermined event of the first routine, the processor apparatus is adapted to process the predetermined event in accordance with the alternate output settings when the second routine is in the at least a first alternate mode.

### BRIEF DESCRIPTION OF THE DRAWINGS

A full understanding of the invention can be gained from the following Description of the Preferred Embodiment when read in conjunction with the accompanying drawings in which:
Fig. 1 is a schematic view of an improved handheld electronic device in accordance with the invention;
Fig. 2 is an exemplary output on a display of the handheld electronic device of Fig. 1;
Fig. 3 depicts a number of exemplary visual outputs that are representative of various output modes that can be active on the handheld electronic device of Fig. 1;
Fig. 4 is an exemplary display dialog of a routine on the handheld electronic device of Fig. 1;
Fig. 5 is an exemplary flowchart depicting at least a portion of a method in accordance with the invention; and
Fig. 6 is an exemplary chart depicting a number of exemplary output settings and some of the effects on the settings when certain output modes are active on the handheld electronic device.

Similar numerals refer to similar parts throughout the specification.

### DESCRIPTION OF THE PREFERRED EMBODIMENT

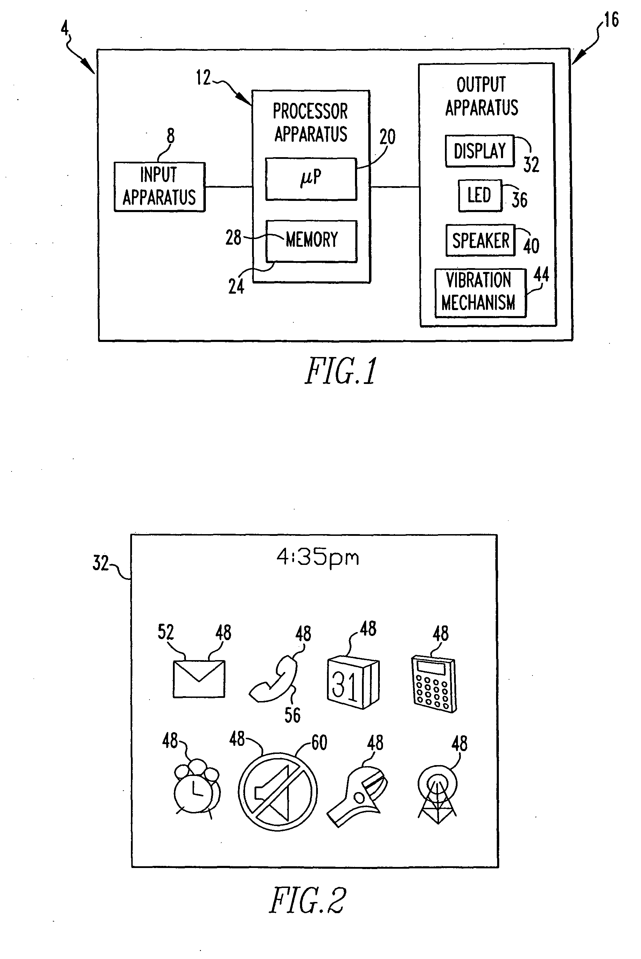

An improved handheld electronic device 4 in accordance with the invention is depicted schematically in Fig. 1. The exemplary handheld electronic device 4 includes an input apparatus 8, a processor apparatus 12, and an output apparatus 16. The processor apparatus 12 is cooperable with the input apparatus 8 and the output apparatus 16 and is responsive to inputs from the input apparatus 8 to provide outputs to the output apparatus 16. The processor apparatus 12 is configured to provide output to the output apparatus 16 in accordance with various output settings, and further in accordance with a number of activatable output modes, in order to provide a device that is customizable and is easily adaptable to various operational situations.

The processor apparatus 12 includes a processor 20 and a memory 24. The processor 20 can be any of a wide variety of processors such as, for example and without limitation, a microprocessor (µP) or other processor. The memory 24 can be any of a variety of storage devices such as, for example and without limitation, RAM, ROM, EPROM, EEPROM, and/or other storage devices. The handheld electronic device 4 includes a plurality of routines 28 that are resident in the memory 24 and are executable on the processor 20.

The exemplary output apparatus 16 includes a display 32, an LED 36, a speaker 40, and a vibration mechanism 44. The display 32 and the LED 36 provide visual output to the user in response to output signals from the processor 20 that may be representative of visual output. The speaker 40 provides audible output in response to output signals from the processor 20 that may be representative of audible output. The vibration mechanism 44 can be any of a variety of mechanisms or systems that provide a tactile vibrational or other output that can be detected by a user and that are provided in response to output signals from the processor 20. Other and/or additional output devices can be provided to the output apparatus 16 without departing from the concept of the invention.

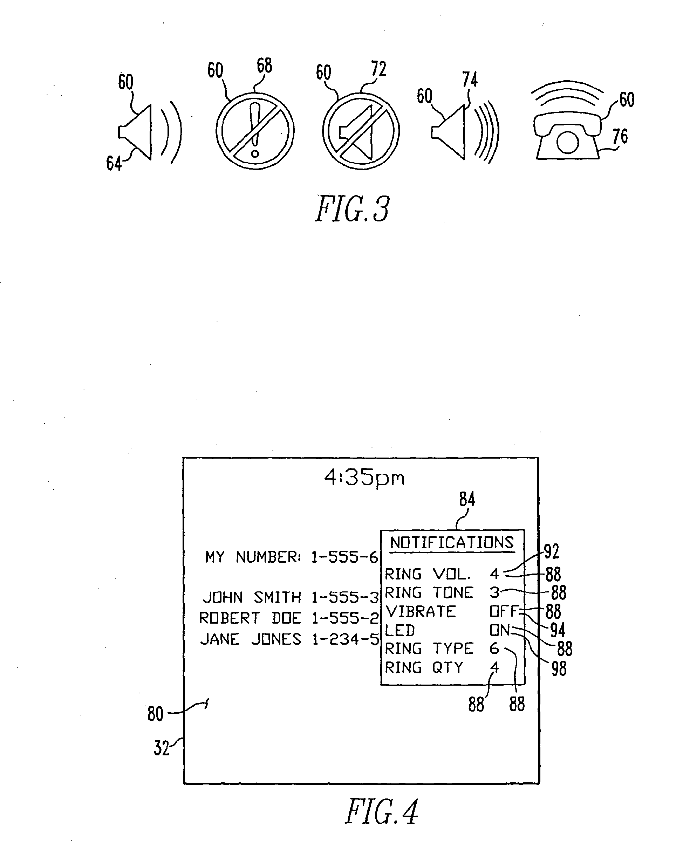

Fig. 2 depicts on the display 32 an exemplary home screen that includes a plurality of icons 48 that are selectable by the user to initiate the execution of various routines 28 on the processor 20. The icons 48 include, by way of example, an e-mail icon 52, a telephone icon 56, and a profiles icon 60 that are selectable by the user to initiate, for example and without limitation, an e-mail routine, a telephone routine, and a profiles routine, respectively. For example, a selection of the telephone icon 56 will initiate the execution of a telephone routine on the processor 20 and will result in an output of a telephone dialog screen 80 on the display 32, such as is depicted generally in Fig. 4.

The profiles icon 60 is selectable to initiate execution of a profiles routine. The profiles icon 60 is also a descriptive icon that is changeable in response to changing circumstances on the handheld electronic device 4. In the example of the profiles icon 60, the appearance of the profiles icon 60 corresponds with the particular output mode that is currently active on the handheld electronic device 4. The profiles icon 60 can take any of the exemplary visual forms depicted generally in Fig. 3. For instance, the profiles icon 60 could be a NORMAL icon 64 that would correspond with a NORMAL output mode being active on the handheld electronic device 4. The profiles icon 60 could alternatively be an OFF icon 68 that would correspond with an OFF output mode being active on the handheld electronic device 4. Still alternatively, the profiles icon 60 could be a SILENT icon 72 that would correspond a SILENT output mode being active on the handheld electronic device 4. It is noted that the exemplary profiles icon 60 of Fig. 2 is the SILENT icon 72. The profiles icon 60 could alternatively be a LOUD icon 74 or a TELEPHONE ONLY icon 76 that would correspond with a LOUD output mode or a TELEPHONE ONLY output mode, respectively, being active on handheld electronic device 4. The profiles icon 60 is thus selectable to initiate execution of the profiles routine, and it also can be any of a plurality of icons, such as are shown in Fig. 3 for example, that visually indicate to the user which of the plurality of output modes is active on the handheld electronic device 4.

In the present exemplary embodiment, the various annunciations that are provided by a routine 28 in response to predetermined events of the routine 28 are customizable within the routine 28 by setting a number of output settings within the routine. When the NORMAL output mode is active on the handheld electronic device 4, such output settings will be employed in processing the various predetermined events of the routine. If any of the alternate output modes, i.e., one of the output modes other than the NORMAL output mode, is active on the handheld electronic device 4, the active output mode will operate as an operational mask with respect to the various output settings and will override certain of the output settings in a predetermined fashion. Each of the alternate output modes has a number of output settings that are applied as alternate output settings to override the NORMAL output settings when the alternate output mode is active on the handheld electronic device 4.

The telephone dialog screen 80 depicted generally in Fig. 4 provides an example demonstrating how various annunciations of a routine 28 are customizable in the routine 28. The telephone dialog screen 80 is output on the display 32 when the telephone routine is active on the handheld electronic device 4. The various exemplary annunciations that are provided by the telephone routine in response to certain predetermined events of the telephone routine are listed and are available for customization in a NOTIFICATIONS menu 84 that, in the present example, is output on the display 32 as a part of the telephone dialog screen 80. The NOTIFICATIONS menu 84 includes a plurality of output settings 88 that can include, for example, a ring volume output setting 92, a vibrate output setting 94, and an LED output setting 98, among other output settings. The exemplary ring volume output setting 92 has been customized to be set at "4". The vibrate output setting 94 has been customized to be set to "OFF", and the LED output setting 98 has been customized to be set to "ON".

Predetermined events of the telephone routine, such as an incoming telephone call, for example, are processed in accordance with the output settings 88 when the NORMAL output mode is active on the handheld electronic device 4. That is, for example, when an incoming telephone call is received on the handheld electronic device 4, the incoming telephone call would be a predetermined event of the telephone routine and would be processed according to the output settings 88 of the telephone routine when the NORMAL output mode is active on the handheld electronic device 4. For instance, upon detecting an occurrence of an incoming telephone call when the NORMAL output mode is active on the handheld electronic device 4, the incoming telephone call will be announced to the user via an audible and visual output from the output apparatus 16. In the present example, this would be because the ring volume output setting 92 has been set to a nonzero setting, i.e., a setting of "4", and the LED output setting 98 has been set to "ON". If, however, an output mode other than the NORMAL output mode is active on the handheld electronic device 4 at the time the incoming telephone call is received, the occurrence of the incoming telephone call will be processed by the processor 20 in accordance with the output parameters of the output mode that is then active on the handheld electronic device 4.

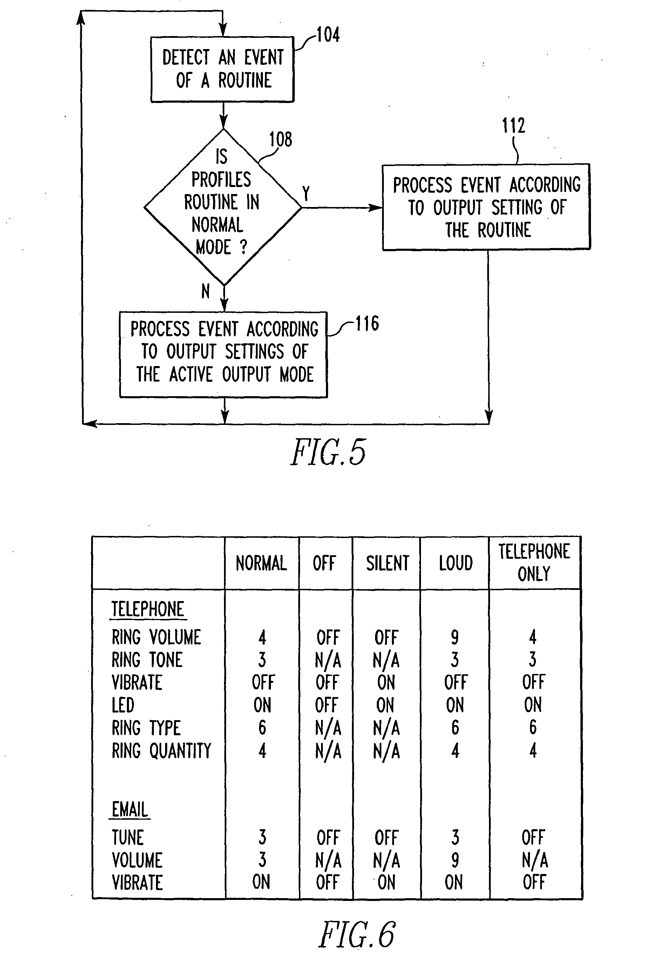

Fig. 6 depicts an exemplary chart of output settings as a function of the output mode that is active on the handheld electronic device 4. The exemplary output modes that are alternatives to the NORMAL output mode are described herein in an exemplary fashion. It is understood, however, that the alternate output modes could be configured in a different fashion, and additional and/or other output modes can be provided without departing from the concept of the invention. The chart of Fig. 6 depicts how a given alternate output mode provides an operational mask that controls all of the various annunciation settings of all of the various routines 28 on the handheld electronic device. That is, all of the annunciation settings that would be active in the NORMAL mode are subject to change depending upon which of the alternate output modes is active on the handheld electronic device 4. While only the telephone application annunciation settings and the e-mail annunciation settings of the handheld electronic device 4 are depicted in Fig. 6, it is understood that an operational mask of an alternate output mode controls all of the annunciation settings of all of the routines resident on the handheld electronic device 4.

When the OFF output mode is active on the handheld electronic device 4, all annunciation outputs are turned off. As such, regardless of the predetermined event on the handheld electronic device 4, the processor 20 will refrain from providing any output signals to the output apparatus 16 responsive to the predetermined event. The OFF output mode might be employed by a user when the user desires no annunciation whatsoever from the handheld electronic device 4, such as when the user is sleeping.

The SILENT output mode is exemplified by an absence of audible output from the output apparatus 16. Visual outputs are provided under the SILENT mode such as outputs to the display 32 and/or to the LED 36. Tactile outputs, such as those that may be provided by the vibration mechanism 44, are permitted to be output under the SILENT output mode. Additionally, an output setting of the SILENT mode of the present exemplary embodiment turns the vibrate output to "ON" regardless of whether the vibrate output setting 94 has been set to "OFF". The SILENT output mode might be desirable when audible annunciations are undesirable, but inaudible annunciations are still desired by the user.

Under the LOUD output mode, all audible annunciations are provided at a relatively higher level of volume than would be provided by the annunciation settings under the NORMAL mode, or will be output at the same level of volume if the volume output setting has already been customized to be set at its maximum possible value. The other output settings 88 of the routine 28 are left unaltered under the LOUD output routine. The LOUD output routine might be used by a user when audible annunciations might be difficult to hear and thus are desired to be output at a relatively higher volume level than might be provided if the NORMAL output mode were active on the handheld electronic device 4.

The TELEPHONE ONLY output mode has output settings wherein the only predetermined events of routines 28 on the handheld electronic device 4 that will result in output signals being sent to the output apparatus 16 are incoming telephone calls to the handheld electronic device 4. In such a situation, and as can be understood from Fig. 6, the telephone annunciations that would be provided if the NORMAL output mode were active are also provided in the same fashion when the TELEPHONE ONLY output mode is active on the handheld electronic device 4. On the other hand, annunciations that might have resulted from other predetermined events, such as predetermined events of non-telephone routines, would result in no output signals being provided by the processor 20 to the output apparatus 16. That is, when the TELEPHONE ONLY mode is active, the processor 20 will refrain from providing output signals to the output apparatus 16 upon a detection of an event that is not an incoming telephone call event. The TELEPHONE ONLY mode might be employed by a user when no annunciations other than telephone annunciations are desired.

In the present exemplary embodiment depicted herein, therefore, the various annunciations of any given routine 28 are customizable within the same routine 28, which enables rapid customization of the annunciations by establishing output settings for the routine 28. The speed and ease of such customization is enhanced by enabling such customization within the routine 28 itself. Predetermined events of the routines 28 are processed by the processor 20 in accordance with the customizable output settings when the NORMAL output mode is active on the handheld electronic device 4. When one of the alternate output modes is active on the handheld electronic device 4, predetermined events of the routines 28 are processed with the processor 20 in accordance with the output settings of the active output mode. The output settings of such an alternate output mode serve as alternate output settings that can override the output parameters of the routines 28 in a predetermined fashion to provide a desirable overall output result. For instance, with a single adjustment all of the annunciations settings can be simultaneously adjusted in a desired predetermined fashion.

An exemplary method in accordance with the invention is depicted generally in the flowchart of Fig. 5. The processor might detect, as at 104, an event of a routine 28. Such an event might be a predetermined event such as the incoming telephone call mentioned above in the context of the telephone routine.

The processor then determines, as at 108, whether the profiles routine is in the NORMAL mode. In the profiles routine, any of the aforementioned output modes can be active on the handheld electronic device 4. If it is determined that the NORMAL mode is active on the handheld electronic device, processing of the predetermined event occurs, as at 112, according to the output settings of the routine 28 that is active on the handheld electronic device 4. On the other hand, if it is determined, as at 108, that the NORMAL output mode is not active on the handheld electronic device 4, such as would be the case if an alternate output mode is active on the handheld electronic device 4, processing continues, as at 116, wherein the predetermined event is processed in accordance with the output settings of the alternate output mode that is active on the handheld electronic device 4.

The improved handheld electronic device 4 and associated method of the invention thus advantageously provide the user with an ability to customize output settings of the routines 28 within the routines 28 themselves. The handheld electronic device 4 and associated method additionally provide a number of alternate output modes that provide operational masks which can override certain of the output settings to process the predetermined event in accordance with alternate output settings in a predetermined fashion.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended and any and all equivalents thereof.

## Claims

1. A method of processing a predetermined event of a first routine from among a plurality of routines stored on a handheld electronic device, the handheld electronic device including an output apparatus and a processor apparatus, with the processor apparatus being adapted to provide output signals to the output apparatus in accordance with predetermined output settings, the first routine having a number of first output settings, a second routine of the plurality of routines being adapted to be adjustable between a NORMAL mode and at least a first alternate mode, the at least a first alternate mode having a number of alternate output settings, the handheld electronic device being adapted to process the predetermined event of the first routine in accordance with the first output settings when the second routine is in the NORMAL mode, the method comprising:
detecting an occurrence of the predetermined event of the first routine;
determining that the second routine is in the at least a first alternate mode; and
responsive to said determining, processing the predetermined event in accordance with the alternate output settings.

2. The method of Claim 1 wherein the at least a first alternate mode is an OFF mode, and wherein the first output settings include an output setting that provides for at least one of an audible output, a visual output, a tactile output responsive to the predetermined event, the method further comprising refraining from providing to the output apparatus output signals responsive to said predetermined event.

3. The method of Claim 1 wherein the at least a first alternate mode is a SILENT mode, and wherein the first output settings include an audio output setting that provides for an audible output responsive to the predetermined event, the method further comprising refraining from providing to the output apparatus output signals representative of an audible output responsive to said predetermined event.

4. The method of Claim 3 wherein the first output settings include an output setting that provides for a visual output responsive to the predetermined event, the method further comprising providing to the output apparatus an output signal representative of a visual output responsive to the predetermined event.

5. The method of Claim 3, further comprising providing to the output apparatus an output signal representative of a tactile output responsive to said predetermined event.

6. The method of Claim 3 wherein the first output settings include a tactile output setting that provides for an absence of a tactile output responsive to the predetermined event, the method further comprising providing to the output apparatus an output signal representative of a tactile output responsive to said predetermined event.

7. The method of Claim 1 wherein the at least a first alternate mode is a LOUD mode, and wherein the first output settings include an audio output setting that provides for an audible output at a first level responsive to the predetermined event, the method further comprising providing to the output apparatus an output signal representative of an audible output responsive to the predetermined event at a second level higher than the first level.

8. The method of Claim 1 wherein the at least a first alternate mode is a TELEPHONE ONLY mode, wherein the first routine is a non-telephone routine, and wherein the first output settings include an output setting that provides for at least one of an audible output, a visual output, a tactile output responsive to the predetermined event, the processor apparatus in the TELEPHONE ONLY mode being adapted to refrain from providing to the output apparatus output signals responsive to the predetermined event, the method further comprising detecting an occurrence of a telephone event of a telephone routine of the plurality of routines, and providing to the output apparatus an output signal responsive to the telephone event.

9. The method of Claim 1, further comprising providing to the output apparatus a signal representative of a visual output that represents the at least a first alternate mode.

10. A handheld electronic device comprising:
an input apparatus adapted to provide input;
an output apparatus adapted to provide output; and
a processor apparatus comprising a processor and a memory, the processor being cooperable with the input apparatus and the output apparatus, the memory having a plurality of routines stored therein that are executable on the processor, the processor being adapted to process a number of predetermined events of at least a portion of the routines of the plurality of routines in accordance with a number of output settings and to provide output signals to the output apparatus in accordance with the output settings, a first routine of the plurality of routines having a number of first output settings, a second routine of the plurality of routines being adapted to be adjustable between a NORMAL mode and at least a first alternate mode, the at least a first alternate mode having a number of alternate output settings, responsive to an occurrence of a predetermined event of the first routine, the processor apparatus being adapted to process the predetermined event in accordance with the first output settings when the second routine is in the NORMAL mode and, responsive to the predetermined event of the first routine, the processor apparatus being adapted to process the predetermined event in accordance with the alternate output settings when the second routine is in the at least a first alternate mode.

11. The handheld electronic device of Claim 10 wherein the at least a first alternate mode is an OFF mode, wherein the first output settings include an output setting that provides for at least one of an audible output, a visual output, a tactile output responsive to the predetermined event, and wherein the processor is adapted to refrain from providing to the output apparatus output signals responsive to said predetermined event.

12. The handheld electronic device of Claim 10 wherein the at least a first alternate mode is a SILENT mode, wherein the first output settings include an audio output setting that provides for an audible output responsive to the predetermined event, and wherein the processor is adapted to refrain from providing to the output apparatus output signals representative of an audible output responsive to said predetermined event.

13. The handheld electronic device of Claim 12 wherein the first output settings include an output setting that provides for a visual output responsive to the predetermined event, and wherein the processor is adapted to provide to the output apparatus an output signal representative of a visual output responsive to the predetermined event.

14. The handheld electronic device of Claim 12, wherein the first output settings include a tactile output setting that provides for a tactile output responsive to the predetermined event, and wherein the processor is adapted to provide to the output apparatus an output signal representative of a tactile output responsive to said predetermined event.

15. The handheld electronic device of Claim 12 wherein the first output settings include a tactile output setting that provides for an absence of a tactile output responsive to the predetermined event, and wherein the processor is adapted to provide to the output apparatus an output signal representative of a tactile output responsive to said predetermined event.

16. The handheld electronic device of Claim 10 wherein the at least a first alternate mode is a LOUD mode, wherein the first output settings include an audio output setting that provides for an audible output at a first level responsive to the predetermined event, and wherein the processor is adapted to provide to the output apparatus an output signal representative of an audible output responsive to the predetermined event at a second level higher than the first level.

17. The handheld electronic device of Claim 10 wherein the at least a first alternate mode is a TELEPHONE ONLY mode, wherein the first routine is a non-telephone routine, wherein the first output settings include an output setting that provides for at least one of an audible output, a visual output, a tactile output responsive to the predetermined event, wherein the processor apparatus in the TELEPHONE ONLY mode is adapted to refrain from providing to the output apparatus output signals responsive to the predetermined event, wherein the processor is adapted to detect an occurrence of a telephone event of a telephone routine of the plurality of routines, and wherein the processor is adapted to provide to the output apparatus an output signal responsive to the telephone event.

18. The handheld electronic device of Claim 10, wherein the output apparatus includes a display, and wherein the processor is adapted to provide to the display a signal representative of a visual output that represents the at least a first alternate mode.
